# EUROPÄISCHE PATENTSCHRIFT

(11) **EP 1 845 680 B1**
(45) Veröffentlichungstag und Bekanntmachung des Hinweises auf die Patenterteilung: **04.02.2009**
(21) Anmeldenummer: 06405155.0
(22) Anmeldetag: 10.04.2006
(51) Int. Cl.: H04L 27/30, H04L 27/12

(54) **Verfahren und Vorrichtung zur Übertragung von Befehlskombinationen mittels codierter Frequenzumtastung**
Method and device for transmitting combinations of instructions using coded FSK
Procédé et dispositif pour la transmission de combinaisons d'instructions par signaux MDF codés

(43) Veröffentlichungstag der Anmeldung: 17.10.2007
(73) Patentinhaber: ABB Technology AG, 8050 Zürich (CH)
(72) Erfinder: Benninger, Hans, 5300 Turgi (CH)
(74) Vertreter: ABB Patent Attorneys

(56) Entgegenhaltungen:
- EP-A- 0 874 500
- DE-A1- 4 138 175
- GB-A- 1 284 999
- US-A- 4 079 355

## Beschreibung

### Technisches Gebiet der Erfindung

Die vorliegende Erfindung betrifft ein Verfahren und eine Vorrichtung zur Übertragung von Befehlskombinationen mittels codierter Frequenzumtastung. Insbesondere betrifft die vorliegende Erfindung ein Verfahren zur Übertragung von Befehlen oder Befehlskombinationen über eine Kommunikationsverbindung mittels codierter Frequenzumtastung.

### Stand der Technik

Bei der Schutzsignalübertragung mittels codierter Frequenzumtastung werden jedem zu übertragenden Befehl oder jeder zu übertragenden Befehlskombination zwei Frequenzen, beispielsweise f₁,f₂ zugeordnet. Die beiden Frequenzen werden dann über einen bestimmten Zeitraum T übertragen:
...,f₁,f₂,f₁,f₂, f₁,f₂, f₁, f₂,f₁

Ein erstes Problem tritt beispielsweise auf, wenn ein Befehlswechsel von einem Befehl A, welchem die Frequenzen f₁,f₂ zugeordnet sind, auf eine Befehlskombination A+B, welcher die Frequenzen f₃,f₄ zugeordnet sind, vollzogen werden soll. Dies kann dann folgendermassen erfolgen: .
...,f₁, f₂, f₁, f₂, f₃, f₄, f₃, f₄,...

Falls nun einem Befehl C die Frequenzen f₂ und f₃ zugeordnet sind, wäre die Befehlsfolge demnach A, C, A+B und nicht wie gewünscht A, A+B. Dies führt zu Fehlern, beispielsweise in Form von Fehlauslösungen.

Bei den oben beschriebenen Befehlsübergängen gibt es verschiedene Varianten bzw. Möglichkeiten eines Befehlsüberganges.

Eine erste Variante bzw. Möglichkeit eines Befehlsüberganges wird als einfacher Frequenzübergang bezeichnet. Bei einem einfachen Frequenzübergang stimmt eine erste Frequenz f₁,_{BK1} oder eine zweite Frequenz f_{2,BK1} der vorangehenden Befehlskombination BK₁ mit einer ersten Frequenz f_{1,BK2} oder einer zweiten Frequenz f_{2,BK2} der nachfolgenden Befehlskombination BK2 überein. Folgende Frequenzkette, welche eine Abfolge von Befehlen repräsentiert, zeigt beispielhaft einen solchen einfachen Frequenzübergang von einer vorangehenden Befehlskombination BK₁ mit einem Frequenzpaar (f₁, f₂) auf eine nachfolgende Befehlskombination BK₂ mit einem Frequenzpaar (f₂, f₃):
...f₁, f₂ , f₁, f₂, f₃, f₂, f₃, f₂, ....

Ein einfacher Frequenzübergang wird bei einem Befehl B analog angewandt.

Eine zweite Möglichkeit wird als doppelter Frequenzübergang bezeichnet. Bei einem doppelten Frequenzübergang wechselt sowohl die erste Frequenz f_{1, BK1} als auch die zweite Frequenz f_{2,BK1} bei einem Befehlsübergang von der vorangehenden Befehlskombination BK₁ auf die nachfolgende Befehlskombination BK₂. Dieser doppelte Frequenzübergang kann nur über einen Zwischenschritt erfolgen. Folgende Frequenzkette, welche eine Abfolge von Befehlen repräsentiert, zeigt beispielhaft einen solchen doppelten Frequenzübergang von einer vorangehenden Befehlskombination BK₁ mit einem Frequenzpaar (f₁,f₂) auf eine nachfolgende Befehlskombination BK₂ mit einem Frequenzpaar (f₃,f₄) über einen Zwischenschritt (f₂,f₃) :
... f₁, f₂, f₁, f₂, f₃, f₄, f₃, f₄, f₃, f₄, ...

Ein doppelter Frequenzübergang wird bei einem Befehl B analog angewandt.

Der oben beschriebene Übergang, könnte auch über die Frequenzpaare (f₁,f₃);(f₁,f₄);(f₂,f₄) erfolgen. Das heisst, dass aufgrund der Kombinatorik bei einem doppelten Frequenzübergang vier Zwischenschritte möglich sind.

Um die korrekte Befehlsfolge zu erhalten, können bestimmten Frequenzpaaren keine Befehlskombinationen zugeordnet werden. Im konkreten Beispiel heisst dies, dass den Frequenzpaaren (f₁,f₃);(f₁,f₄);(f₂,f₄) kein Befehl oder Befehlskombination zugeordnet ist. Bei einer grossen Anzahl von Befehlen ist dies jedoch nachteilig, denn der Frequenzbereich muss dann sehr gross sein, um die vielen verschiedenen Kombinationen abzudecken.

Eine andere Lösung des Standes der Technik ist, eine Pause zwischen den einzelnen Befehlskombinationen einzuschalten. Dies ist jedoch nachteilig, denn die Gesamtzeit zur Übertragung von Befehlskombinationen steigt dadurch erheblich an und eine schnelle Übertragung von Befehlskombinationen ist nicht mehr gewährleistet.

DE 4138175 offenbart ein Verfahren zum Übermitteln von codierten Befehlen mittels unterschiedlicher Frequenzen.

### Darstellung der Erfindung

Ausgehend von diesem Stand der Technik liegt der Erfindung die Aufgabe zugrunde, ein Verfahren und eine Vorrichtung anzugeben, welches eine sichere und eine eineindeutige Übertragung von Befehlen bzw. Befehlskombinationen zulässt und die Probleme des Standes der Technik überwindet.

Diese Aufgabe wird durch ein Verfahren und eine Vorrichtung zur Übertragung von Befehlen mit den Merkmalen des Patentanspruchs 1 bzw. 7 gelöst. Vorteilhafte Ausgestaltungen der Erfindung sind in den abhängigen Ansprüchen angegeben.

Demgemäss dient ein Verfahren der Übertragung von Befehlen oder Befehlskombinationen über eine Kommunikationsverbindung mittels codierter Frequenzumtastung. Einem Befehl oder einer Befehlskombination wird jeweils ein Frequenzpaar zugeordnet. Dabei wird bei einem Befehlsübergang von einem vorangehenden Befehl oder Befehlskombination auf einen nachfolgenden Befehl oder Befehlskombination eine als erste zu übertragende Frequenz des Frequenzpaares des nachfolgenden Befehls oder Befehlskombination in Abhängigkeit von mindestens einem anderen zugeordneten Frequenzpaar gewählt.

Die Auswahl der ersten zu übertragenden Frequenz bringt den Vorteil, dass unerwünschte Befehlskombinationen nicht mehr auftreten oder gar übertragen werden. Zudem kann die Breite des Frequenzbands kleiner gewählt werden, da dieses enge Frequenzband effizienter ausgenützt wird.

Die genannte erste zu übertragende Frequenz ist insbesondere in Abhängigkeit des Frequenzpaares des vorangehenden Befehls oder Befehlskombination gewählt.

Dies ist vorteilhaft, denn dies führt zu einer Begrenzung der Anzahl der möglichen Kombinationen, denn die Wahl ist somit auf die erste zu übertragende Frequenz beschränkt.

Ein Befehl oder eine Befehlskombination ist beispielsweise ein zu übertragender unabhängiger Schutzbefehl. Dieser unabhängige Schutzbefehl wird vorzugsweise mittels einer Stromleitung übertragen.

Die Frequenzen des Befehls oder der Befehlskombination liegen vorzugsweise in einem limitierten Frequenzband. Vorzugsweise hat das Frequenzband eine Breite von 4 kHz.

Zudem können beim erfindungsgemässen Verfahren beim Übergang vom vorangehenden Befehl oder Befehlskombination auf den nachfolgenden Befehl oder Befehlskombination eine Einschubfrequenz und/oder eine Pause eingeschoben werden.

Der Einschub einer Einschubfrequenz oder einer Pause ermöglicht eine Vergrösserung der Anzahl der zu übertragenden Befehle oder Befehlskombinationen bei gleich bleibendem Frequenzband.

Neben einem Verfahren zur Übertragung von Befehlen oder Befehlskombinationen über eine Kommunikationsverbindung mittels codierter Frequenzumtastung bezieht sich die vorliegende Erfindung auch auf eine Vorrichtung zur Übertragung von Befehlen oder Befehlskombinationen über eine Kommunikationsverbindung mittels codierter Frequenzumtastung, sowie ein Computerprogrammprodukt umfassend Computerprogrammcodemittel zur Steuerung der Vorrichtung, insbesondere ein Computerprogrammprodukt mit einem Datenträger, der die Computerprbgrammcodemittel enthält.

### Kurze Beschreibung der Zeichnung

Die Erfindung wird im Folgenden anhand der Zeichnung näher beschrieben. Es zeigen:
- Fig. 1: eine schematische Darstellung einer Vorrichtung zur Übertragung von Befehlen oder Befehlskombinationen nach einem Verfahren gemäss der vorliegenden Erfindung;
- Fig. 2: ein Flussdiagramm mit Verfahrensschritten nach einem Verfahren gemäss der vorliegenden Erfindung.

### Beschreibung eines Ausführungsbeispiels

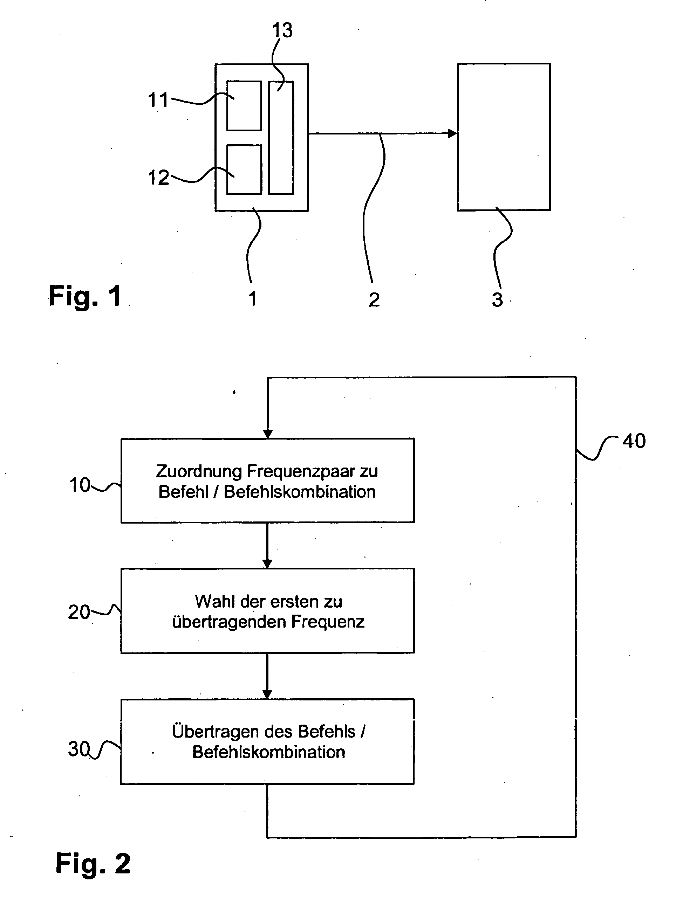

Wie in Figur 1 schematisch dargestellt ist, umfasst die Vorrichtung 1 ein Auswahlmodul 11, eine Befehlstabelle 12 sowie ein Kommunikationsmodul 13. Das Kommunikationsmodul 13 ist eingerichtet, Befehle und/oder Befehlskombinationen mittels codierter Frequenzumtastung (FSK, Frequency Shift Keying) über eine Kommunikationsleitung 2 an eine Empfangsvorrichtung 3 zu übertragen.

Das Kommunikationsmodul 13 umfasst vorzugsweise ein Modem für die Kommunikation über eine Stromleitung (PLC, Powerline Communications).

Das Auswahlmodul 11 ist vorzugsweise als programmiertes Softwaremodul ausgeführt, das einen oder mehrere Prozessoren der Vorrichtung 1 steuert, wie diese nachfolgend mit Figur 2 beschrieben wird.

Die Befehlstabelle 12 umfasst Befehle und/oder Befehlskombinationen, denen jeweils ein Frequenzpaar zugeordnet ist. Die Befehlstabelle 12 ist als separate Datentabelle gespeichert oder in das Auswahlmodul 11 integriert. Zudem kann die Befehlstabelle 12 auch eine Befehlsübergangstabelle umfassen.

Einem Befehl B, welcher in der Befehlstabelle 12 gespeichert ist, ist ein Frequenzpaar zugeordnet, welches eine erste Frequenz f_{1,B} und eine zweite Frequenz f_{2,B} aufweist. Die erste Frequenz f_{1,B} und die zweite Frequenz f_{2,B} haben unterschiedliche Periodenlängen. Einer Befehlskombinationen BK, welche in der Befehlstabelle 12 gespeichert ist, ist ein Frequenzpaar zugeordnet, welches eine erste Frequenz f_{1,BK} und eine zweite Frequenz f_{2,BK} aufweist. Unter einem zugeordneten Frequenzpaar wird demnach ein Frequenzpaar verstanden, das einen Befehl oder eine Befehlskombination repräsentiert.

Als Befehlsübergang wird ein Übergang von einem vorangehenden Befehl B₁ auf einen nachfolgenden Befehl B₂ oder von einer vorangehenden Befehlskombinationen BK₁ auf eine nachfolgende Befehlskombinationen BK₂ verstanden. Als Befehlsübergang wird auch ein Übergang von einem vorangehenden Befehl B₁ auf eine nachfolgende Befehlskombination BK₂ oder von einer vorangehenden Befehlskombination BK₁ auf einen nachfolgenden Befehl B₂ verstanden.

Die zu übertragenden Befehle B oder Befehlskombinationen BK können beispielsweise in drei Kategorien aufgeteilt werden. Die Einteilung in Kategorien dient der Definition von verschiedenen Befehlen B bzw. Befehlskombinationen BK.

Befehle oder Befehlskombinationen der ersten Kategorie sind Befehle oder Befehlskombinationen, bei welchen für eine bestimmte Befehlstabelle die erste Frequenz f_{1,B2} oder f_{1,BK2} eines Befehls oder einer Befehlskombination nach einem Wechsel des Befehls oder der Befehlskombination fix vorgegeben ist.

Befehle oder Befehlskombinationen der zweiten Kategorie sind Befehle oder Befehlskombinationen, bei welchen für eine bestimmte Befehlstabelle eine abhängige Frequenz des Frequenzpaares nach einem Übergang von einem vorangehenden Befehl B₁ oder einer vorangehenden Befehlskombination BK₁ auf einen nachfolgenden Befehl B₂ oder eine nachfolgende Befehlskombination BK₂ in Abhängigkeit des vorangehenden Befehls B₁ oder der vorangehenden Befehlskombination BK₁ vorgegeben ist.

Befehle oder Befehlskombinationen der dritten Kategorie sind Befehle, bei welchen für eine bestimmte Befehlstabelle der Übergang von einer vorangehenden Befehlskombination auf eine nachfolgende Befehlskombination über einen Zwischenschritt erfolgt. Der Zwischenschritt kann eine Einschubfrequenz E oder eine Pause P sein.

Wenn genügend Einzelfrequenzen zu Verfügung stehen, können immer Frequenzzuordnungen gefunden werden, sodass alle Befehle und Befehlskombinationen in die erste Kategorie fallen.
Bei Frequenzknappheit, d.h. wenn viele unterschiedliche Befehlskombinationen bzw. Befehle in einem engen Frequenzband zu übertragen sind, müssen jedoch auch Befehle und Befehlskombinationen der zweiten Kategorie und der dritten Kategorie zugelassen werden. Denn eine Verwendung dieser Befehlskombinationen bzw. Befehle ermöglicht einen optimierten Einsatz der zur Verfügung stehenden Frequenzen.

Wie in der Figur 2 dargestellt ist, ordnet das Auswahlmodul 11 in einem ersten Verfahrensschritt 10 einem zu übertragenden Befehl respektive einer zu übertragenden Befehlskombination unter Zuhilfenahme der Befehlstabelle 12 ein Frequenzpaar zu.

Eine oben beschriebene Befehlstabelle 12 kann beispielsweise nach der Tabelle 1 ausgestaltet werden. Dabei werden vier Befehle A, B, C, D und mögliche Befehlskombinationen, welche in der Befehlstabelle abgespeichert sind, gezeigt.

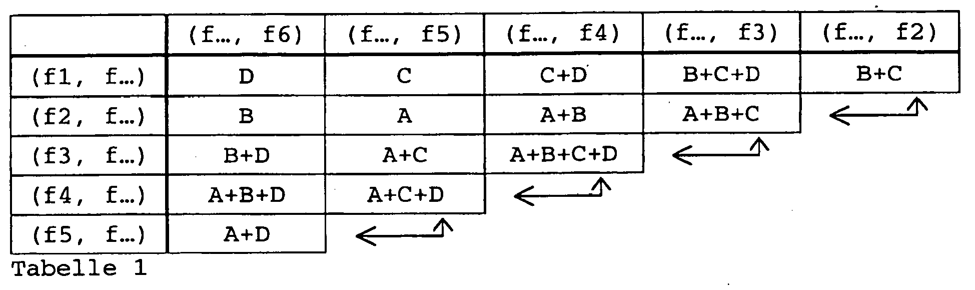

Dem Befehl D wird gemäss Tabelle 1 das Frequenzpaar (f₁,f₆) zugeordnet. Der Befehlskombination B+D wird gemäss Tabelle 1 das Frequenzpaar (f₃,f₆) zugeordnet.

Wird nun beispielsweise ein vorangehender Befehl A übertragen und es soll eine nachfolgende Befehlskombination A+B übertragen werden, dann kann dies mit einem einfachen Frequenzübergang erfolgen:

| | |
|---|---|
| ... f₂, f₅, f₂, f₅, f₂, f₄, f₂, f₄, ... | A → A+B |

Wird dann beispielsweise ein Befehl A übertragen und es soll eine Befehlskombination A+B+D übertragen werden, erfolgt dies über einen doppelten Frequenzübergang über die Befehlskombination A+D:

| | |
|---|---|
| ... f₂, f₅, f₂, f₅, f₆, f₅ , f₆ , ... | A → A+D |
| ...f₅, f₆, f₅, f₆, f₄, f₆, f₄, ... | A+D → A+B+D |

Tabelle 2 zeigt ein weiteres Beispiel einer Befehlstabelle 12 mit drei unabhängigen Befehlen A, B, C und einem Testbefehl T. In diesem Beispiel haben die Befehle T, A, B, C je eine gemeinsame Frequenz f₅.

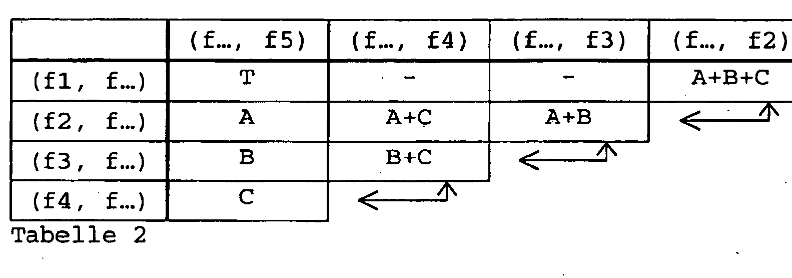

Zur Darstellung von diesen drei unabhängigen Befehlen A, B, C und dem Testbefehl T sowie den aus den Befehlen A, B, C entstehenden Befehlskombinationen A+C, A+B, B+C, A+B+C werden acht verschiedene Frequenzkombinationen bzw. Frequenzpaare benötigt.

Wie aus der Tabelle 2 ersichtlich, reichen fünf Einzelfrequenzen aus, um zehn unterschiedliche Frequenzpaare zu bilden. In Tabelle 2 wurden die Frequenzpaare so zugeordnet, dass alle Befehle bzw. Befehlskombinationen mit Ausnahme des Befehls A zur ersten Kategorie gehören. Die Frequenzpaare (f₁,f₄ und f₁, f₃) wurden dabei nicht verwendet.

In einem zweiten Verfahrensschritt 20 wird die erste zu übertragende Frequenz unter Zuhilfenahme des Auswahlmoduls 11 gewählt.

Das Auswahlmodul 11 wählt dabei die Frequenz, welche bei einem Befehlsübergang von einem vorangehenden Befehl B₁ auf einen nachfolgenden Befehl B₂ als erste übertragen werden soll. Dabei wird diese als erste zu übertragende Frequenz in Abhängigkeit-von mindestens einem anderen zugeordneten Frequenzpaar gewählt. Diese als erste zu übertragende Frequenz kann auch als vorzugebende Frequenz bezeichnet werden.

Gleiches gilt bei der Übertragung von Befehlskombinationen BK: Bei einem Befehlsübergang von einer vorangehenden Befehlskombination BK₁ auf eine nachfolgende Befehlskombination BK₂ wird eine als erste zu übertragende Frequenz des Frequenzpaares der nachfolgenden Befehlskombination BK₂ in Abhängigkeit von mindestens einem anderen zugeordneten Frequenzpaar vom Auswahlmodul 11 gewählt.

Natürlich gilt dies auch für den Befehlsübergang von einem vorangehenden Befehl auf eine nachfolgende Befehlskombination oder von einer vorangehenden Befehlskombination auf einen nachfolgenden Befehl.

Vorzugweise wählt das Auswahlmodul 11 die genannte erste zu übertragende Frequenz in Abhängigkeit des Frequenzpaars des direkt vorangehenden Befehls oder Befehlskombination. Wobei der vorangehende Befehl der Befehl ist, welcher unmittelbar vor dem nachfolgenden Befehl übermittelt wird.

Bei einer Befehlsfolge B₁, B₂ oder B₁, BK₂ oder BK₁, BK₂ oder BK₁, B₂ heisst dies also, dass eine erste Frequenz f_{1,B2} oder f_{1,BK2} des nachfolgenden Befehls B₂ oder Befehlskombination BK₂ abhängig vom Frequenzpaar eines vorangehenden Befehls B₁ oder Befehlskombination BK₁ gewählt wird. Insbesondere ist die erste Frequenz f_{1,B2} des nachfolgenden Befehls B₂ oder Befehlskombination BK₂ von der ersten Frequenz f_{1,B1} oder f_{1,BK1} und/oder von der zweiten Frequenz f_{2,B1} oder f_{2,BK1} des vorangehenden Befehls B₁ oder Befehlskombination BK₁ abhängig.

Vorzugsweise wählt das Auswahlmodul 11 die als erste zu übertragende Frequenz in Abhängigkeit mit dem direkt vorangehenden Befehl oder Befehlskombination aus.

Das Auswahlmodul 12 kann beispielsweise derart ausgeführt sein, dass es eine in der Befehlstabelle enthaltene Befehlsübergangstabelle abfragen kann. Tabelle 3 ist ein Beispiel einer solchen Befehlsübergangstabelle, welche die Wahl der ersten zu übertragenden Frequenz definiert. In Tabelle 3 sind die Übergänge der in Tabelle 2 definierten Befehle bzw. Befehlskombinationen dargestellt, bei welchen Einschränkungen bestehen. Bei diesen Übergängen sind die genannten als erste zu übertragenden Frequenzen durch die unterstrichenen und fettgedruckten Frequenzindizes identifiziert.

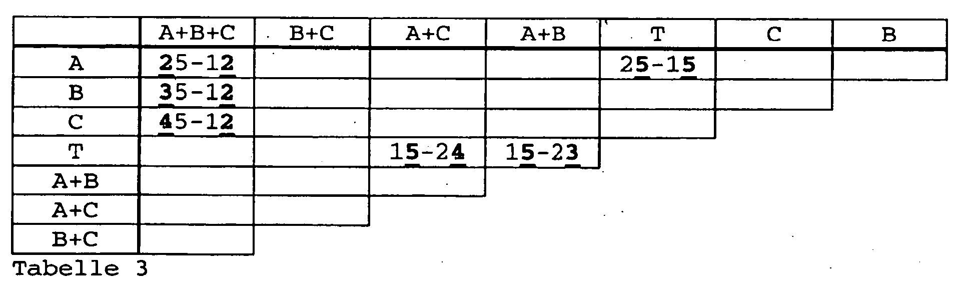

Drei beispielhafte Befehlsübergänge sollen die als erste zu übertragende Frequenz des Frequenzpaares des nachfolgenden Befehls oder Befehlskombination näher beschreiben:

### Erstes Beispiel (A → A+B+C):

Ein Übergang vom Befehl A (f₂,f₅) auf die Befehlskombination A+B+C (f₁, f₂) erfolgt folgendermassen:

| | |
|---|---|
| ... f₂, f₅, f₂, f₅, f₂, f₅, f₂, f₁, f₂, f₁, f₂... | A → A+B+C |

Dabei ist die Frequenz f₂ die als erste zu übertragende Frequenz des Frequenzpaares f₁,f₂ der nachfolgenden Befehlskombination A+B+C. Denn würde anstelle von der Frequenz f₂ die Frequenz f₁ nach der Frequenz f₅ als erstere übertragen, würde der Befehl T übertragen werden:

| | |
|---|---|
| ... f₂, f₅, f₂, f₅, f₂, f₅, f₁... | A→ T |

### Zweites Beispiel (A → T):

Dieses Problem tritt natürlich auch beim gewünschten Befehlsübergang von A (f_{2,} f₅) auf T (f_{1,} f₅) bzw. T (f_{1,} f₅) auf A (f_{2,} f₅) :

| | |
|---|---|
| ...f₂, f₅, f₂, f₅, f₂, f₅, f₁, f₅, f₁, f₅... | A → T |

Dabei ist die Frequenz f₅ die als erste zu übertragende Frequenz des Frequenzpaares f₁,f₅ des nachfolgenden Befehls T Denn würde anstelle von der Frequenz f₅, die Frequenz f₁ übertragen, würde fälschlicherweise der Befehl A+B+C übertragen werden:

| | |
|---|---|
| ... f₂, f₅, f₂, f₅, f₂, f₂, f₂, f₅, ... | A → A+B+C |

### Drittes Beispiel (T → A+C) :

Bei einem Befehlsübergang von T (f₁, f₅) auf A+C (f₂,f₄) werden folgende Frequenzen übertragen:

| | |
|---|---|
| ...f₁, f₅, f₁, f₅, f₄, f₂, f₄, f₂ ... | T → A+C |

Hier ist die als erste zu übertragende Frequenz die Frequenz f₄. Würden beim Übergang andere Frequenzen übertragen, dann könnte folgender unerwünschter Übergang auftreten:

| | |
|---|---|
| ...f₁, f_{5,} f₁, f₅, f₁, f₂, f₄, f₂ ... | T → A+B+C |

Die als erste zu übertragenden Frequenzen, wie diese in der Befehlsübergangstabelle dargestellt sind, können in unterschiedlicher Weise ermittelt werden. Die Ermittlung kann beispielsweise regelbasiert erfolgen. Als besonders vorteilhaft hat es sich erwiesen, dass bei der Zuordnung der Frequenzpaare zu den Befehlen eine gemeinsame Frequenz bei allen Befehlen auftritt. In Tabelle 2 ist dies beispielsweise die Frequenz f₅, welche bei allen Befehlen A, B, C, T auftritt. Diese so ermittelten Frequenzen können dann in einer Befehlstabelle 12 abgelegt werden.

Eine weitere, in Tabelle 2 wegen der Kombination A+B+C nicht vollständig umgesetzte Regel für günstige Frequenzzuordnungen besagt, dass die beiden für T verwendeten Frequenzen nur in denjenigen Frequenzpaaren vorkommen sollen, die Einzelbefehlen zugeordnet werden.

Bei Befehlen oder Befehlskombinationen der ersten Kategorie werden die als erste zu übertragenden Frequenzen statisch bestimmt. Die Bestimmung der als erste zu übertragenden Frequenzen erfolgt dabei vor dem Ausführen des Verfahrens, beispielsweise während der Implementierung desselben, d.h. bei der Festlegung der Befehlstabelle. Diese statisch bestimmten als erste zu übertragenden Frequenzen können in der Befehlsübergangstabelle abgelegt werden.

Bei Befehlen oder Befehlskombinationen der zweiten Kategorie müssen die als erste zu übertragenden Frequenzen dynamisch in Abhängigkeit des vorangehenden Befehls oder Befehlskombination während dem Betrieb des Verfahrens ermittelt werden. Hierzu müssen geeignete Algorithmen oder Verarbeitungsregeln vorgesehen werden. Die entsprechenden Algorithmen bzw. Verarbeitungsregeln werden dann von einem oder mehreren Prozessoren verarbeitet.

In einem dritten Verfahrensschritt 30 wird das dem Befehl oder der Befehlskombination entsprechende Frequenzpaar gemäss der im Schritt 30 bestimmten Reihenfolge mittels dem Kommunikationsmodul 13 übertragen.

Ein vierter Verfahrensschritt 40 wird dann angewandt, wenn ein weiterer Befehl übertragen werden soll. In diesem Fall beginnt das Verfahren wieder mit dem Verfahrensschritt 10.

Für vier unabhängige Befehle A, B, C, D plus einen Testbefehl T werden 16 Frequenzkombinationen benötigt. Eine bevorzugte Frequenzzuordnung mit 8 Einzelfrequenzen ist in der Befehlstabelle 4 dargestellt, wobei alle Befehle und Befehlskombinationen der Kategorie 1 zugeordnet werden können:

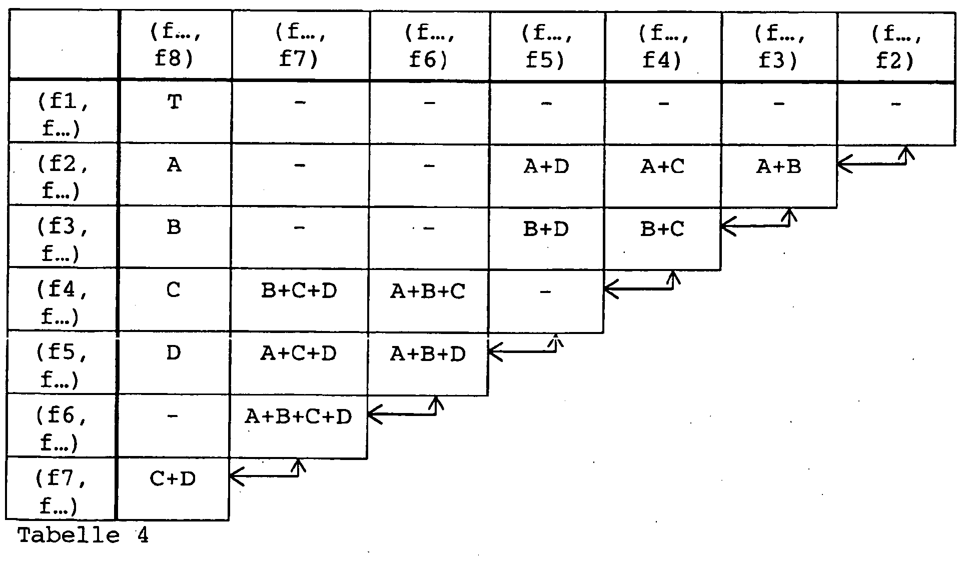

In Tabelle 5 sind zu allen Befehlen oder Befehlskombinationen, zu welchen bei bestimmten Übergängen Einschränkungen bestehen, die vorzugebenden, d.h. als erste zu übertragenden Frequenzen zusammengestellt.

**Tabelle 5**

| Befehl | Vorzugebende Frequenz |
|---|---|
| C | f8 |
| D | f8 |
| A+C | f2 |
| B+D | f3 |
| C+D | f8 |
| A+C+D | f5 |
| B+C+D | f4 |

Die zu übertragenden Befehle B oder Befehlskombination BK können unterschiedlichster Art sein. Insbesondere aber sind die Befehle unabhängige Schutzbefehle zur Verwendung in elektrischen Stromversorgungsnetzen. Dabei werden die Befehle über Kommunikationskanäle übertragen. Falls die Befehle oder Befehlskombinationen zum Schutz von Einrichtungen des Stromversorgungsnetzes benützt werden, wird vorzugsweise eine Stromleitung zur Übertragung der Schutzbefehle als Kommunikationskanal eingesetzt.

Die Befehle B oder die Befehlskombinationen BK liegen vorzugsweise in einem limitierten Frequenzband. Dies ermöglicht eine besonders effektive und effiziente Ausgestaltung der entsprechenden Vorrichtungen. Vorzugsweise hat das Frequenzband eine Breite von 4 kHz.

## Patentansprüche

1. Verfahren zur Übertragung von Befehlen oder Befehlskombinationen über eine Kommunikationsverbindung (2) mittels codierter Frequenzumtastung, wobei einem Befehl oder einer Befehlskombination jeweils ein Frequenzpaar zugeordnet wird (10), **dadurch gekennzeichnet, dass** bei einem Befehlsübergang von einem vorangehenden Befehl oder Befehlskombination auf einen nachfolgenden Befehl oder Befehlskombination eine als erste zu übertragende Frequenz des Frequenzpaares des nachfolgenden Befehls oder Befehlskombination in Abhängigkeit des Frequenzpaares des vorangehenden Befehls oder Befehlskombination gewählt wird (20).

2. Verfahren nach Anspruch 1, **dadurch gekennzeichnet, dass** der Befehl oder die Befehlskombination ein zu übertragender Schutzbefehl ist, und dass dieser Schutzbefehl mittels einer Stromleitung (2) übertragen wird.

3. Verfahren nach Anspruch 2, **dadurch gekennzeichnet, dass** die Frequenzen des Befehls oder der Befehlskombination in einem limitierten Frequenzband mit einer Breite von 4 kHz liegen.

4. Verfahren nach einem der Ansprüche 1 bis 3, **dadurch gekennzeichnet**, das zwei unterschiedlichen Befehlen oder Befehlskombinationen zugeordnete Frequenzpaare eine gemeinsame Frequenz haben.

5. Verfahren nach einem der Ansprüche 1 bis 4, **dadurch gekennzeichnet, dass** beim Übergang vom vorangehenden Befehl oder Befehlskombination auf den nachfolgenden Befehl oder Befehlskombination eine Einschubfrequenz und/oder eine Pause eingeschoben wird.

6. Vorrichtung (1) zur Übertragung von Befehlen oder Befehlskombinationen über eine Kommunikationsverbindung (2) mittels codierter Frequenzumtastung, wobei einem Befehl oder einer Befehlskombination jeweils ein Frequenzpaar zugeordnet ist, **dadurch gekennzeichnet, dass** die Vorrichtung (1) eingerichtet ist, bei einem Befehlsübergang von einem vorangehenden Befehl oder Befehlskombination auf einen nachfolgenden Befehl oder Befehlskombination eine als erste zu übertragende Frequenz des Frequenzpaares des nachfolgenden Befehls oder Befehlskombination in Abhängigkeit des Frequenzpaares des vorangehenden Befehls oder Befehlskombination zu wählen.

7. Vorrichtung nach Anspruch 6, **dadurch gekennzeichnet, dass** die Vorrichtung (1) eingerichtet ist, als Befehl oder Befehlskombination einen zu übertragenden Schutzbefehl mittels einer Stromleitung (2) zu übertragen.

8. Vorrichtung nach Anspruch 7, **dadurch gekennzeichnet, dass** die Frequenzen des Befehls oder der Befehlskombination in einem limitierten Frequenzband mit einer Breite von 4 kHz liegen.

9. Vorrichtung nach einem der Ansprüche 6 bis 8, **dadurch gekennzeichnet, dass** zwei unterschiedlichen Befehlen oder Befehlskombinationen zugeordnete Frequenzpaare eine gemeinsame Frequenz haben.

10. Computerprogrammprodukt umfassend Computerprogrammcodemittel zur Steuerung eines oder mehrerer Prozessoren einer Vorrichtung (1) zur Übertragung von Befehlen oder Befehlskombinationen über eine Kommunikationsverbindung (2) mittels codierter Frequenzumtastung, wobei einem Befehl oder einer Befehlskombination jeweils ein Frequenzpaar zugeordnet ist, derart, dass die Vorrichtung (1) bei einem Befehlsübergang von einem vorangehenden Befehl oder Befehlskombination auf einen nachfolgenden Befehl oder Befehlskombination eine als erste zu übertragende Frequenz des Frequenzpaares des nachfolgenden Befehls oder Befehlskombination in Abhängigkeit des Frequenzpaares des vorangehenden Befehls oder Befehlskombination wählt (20).

## Claims

1. Method for transmission of commands or command combinations via a communication link (2) by means of coded frequency-shift keying, with a command or command combination in each case being associated (10) with one frequency pair, **characterized in that**, when a command changes from a preceding command or command combination to a subsequent command or command combination, one frequency (which will be the first to be transmitted) in the frequency pair of the subsequent command or command combination is chosen (20) as a function of the frequency pair of the preceding command or command combination.

2. Method as claimed in Claim 1, **characterized in that** the command or the command combination is a protection command to be transmitted, and **in that** this protection command is transmitted by means of an electrical power line (2).

3. Method as claimed in Claim 1, **characterized in that** the frequencies of the command or of the command combination are in a limited frequency band with a width of 4 kHz.

4. Method according to one of Claims 1 to 3,
**characterized in that** the frequency parts associated to two different commands or command combinations have a shared frequency.

5. Method as claimed in one of Claims 1 to 4, **characterized in that** an insert frequency and/or a pause are/is inserted on changing from the preceding command or command combination to the subsequent command or command combination.

6. Apparatus (1) for transmission of commands or command combinations via a communication link (2) by means of coded frequency-shift keying, with a command or command combination in each case being associated with one frequency pair, **characterized in that** the apparatus (1) is designed such that when a command changes from a preceding command or command combination to a subsequent command or command combination, one frequency (which will be the first to be transmitted) in the frequency pair of the subsequent command or command combination can be chosen as a function of the frequency pair of the preceding command or command combination.

7. Apparatus according to Claim 6, **characterized in that** the apparatus (1) is designed to transmit a protection command to be transmitted by means of an electrical power line (2) as a command or command combination.

8. Apparatus according to Claim 7, **characterized in that** the frequencies of the command or of the command combination are in a limited frequency band with a width of 4kHZ.

9. Apparatus according to one of Claims 6 to 8, **characterized in that** the frequency parts associated to two different commands or command combinations have a shared frequency.

10. Computer program product having computer program code means for controlling one or more processors of an apparatus (1) for transmission of commands or command combinations via a communication link (2) by means of coded frequency-shift keying, with a command or a command combination in each case being associated with one frequency pair, in such a manner that the apparatus (1) chooses (20), when a command changes from a preceding command or command combination to a subsequent command or command combination, one frequency, which will be the first to be transmitted, in the frequency pair of the subsequent command or command combination as a function of the frequency pair of the preceding command or command combination.

## Revendications

1. Procédé de transmission d'instructions ou de combinaisons d'instructions par le biais d'une liaison de communication (2) au moyen d'une modulation par déplacement de fréquence codée, une paire de fréquences étant à chaque fois associée à une instruction ou à une combinaison d'instructions (10), **caractérisé en ce que** lors d'une transition d'instruction d'une instruction ou combinaison d'instructions précédente à une instruction ou combinaison d'instructions suivante, une première fréquence à transmettre de la paire de fréquences de l'instruction ou de la combinaison d'instructions suivante est choisie en fonction de la paire de fréquences de l'instruction ou de la combinaison d'instructions précédente (20).

2. Procédé selon la revendication 1, **caractérisé en ce que** l'instruction ou la combinaison d'instructions est une instruction de protection à transmettre et que cette instruction de protection est transmise au moyen d'une ligne électrique (2).

3. Procédé selon la revendication 2, **caractérisé en ce que** les fréquences de l'instruction ou de la combinaison d'instructions se trouvent dans une bande de fréquences limitée ayant une largeur de 4 kHz.

4. Procédé selon l'une des revendications 1 à 3, **caractérisé en ce que** les paires de fréquences associées à deux instructions ou combinaisons d'instructions différentes possèdent une fréquence commune.

5. Procédé selon l'une des revendications 1 à 4, **caractérisé en ce qu'**une fréquence d'insertion et/ou une pause est insérée lors de la transition de l'instruction ou combinaison d'instructions précédente à l'instruction ou combinaison d'instructions suivante.

6. Dispositif (1) de transmission d'instructions ou de combinaisons d'instructions par le biais d'une liaison de communication (2) au moyen d'une modulation par déplacement de fréquence codée, une paire de fréquences étant à chaque fois associée à une instruction ou à une combinaison d'instructions, **caractérisé en ce que** le dispositif (1) est configuré pour, lors d'une transition d'instruction d'une instruction ou combinaison d'instructions précédente à une instruction ou combinaison d'instructions suivante, sélectionner une première fréquence à transmettre de la paire de fréquences de l'instruction ou de la combinaison d'instructions suivante en fonction de la paire de fréquences de l'instruction ou de la combinaison d'instructions précédente.

7. Dispositif selon la revendication 6, **caractérisé en ce que** le dispositif (1) est configuré pour transmettre comme instruction ou combinaison d'instructions une instruction de protection à transmettre au moyen d'une ligne électrique (2).

8. Dispositif selon la revendication 7, **caractérisé en ce que** les fréquences de l'instruction ou de la combinaison d'instructions se trouvent dans une bande de fréquences limitée ayant une largeur de 4 kHz.

9. Dispositif selon l'une des revendications 6 à 8, **caractérisé en ce que** les paires de fréquences associées à deux instructions ou combinaisons d'instructions différentes possèdent une fréquence commune.

10. Programme informatique comprenant un moyen de code de programme informatique pour commander un ou plusieurs processeurs d'un dispositif (1) de transmission d'instructions ou de combinaisons d'instructions par le biais d'une liaison de communication (2) au moyen d'une modulation par déplacement de fréquence codée, une paire de fréquences étant à chaque fois associée à une instruction ou à une combinaison d'instructions, de telle sorte que le dispositif (1), lors d'une transition d'instruction d'une instruction ou combinaison d'instructions précédente à une instruction ou combinaison d'instructions suivante, sélectionne une première fréquence à transmettre de la paire de fréquences de l'instruction ou de la combinaison d'instructions suivante en fonction de la paire de fréquences de l'instruction ou de la combinaison d'instructions précédente (20).
